# EUROPÄISCHE PATENTSCHRIFT

(11) **EP 3 368 464 B1**
(45) Veröffentlichungstag und Bekanntmachung des Hinweises auf die Patenterteilung: **04.12.2019**
(21) Anmeldenummer: 16787474.2
(22) Anmeldetag: 27.10.2016
(51) Int. Cl.: B66F 9/075, B60K 6/28, B60K 6/34, B60K 6/46, B60L 1/00, B60L 7/06, B60L 7/14, B60L 7/26, B60L 50/40, B60L 50/61, B60L 58/21, B60L 58/20, B66F 9/24

(54) **SCHWERLASTSTAPLER**
HEAVY-DUTY LIFT TRUCK
CHARIOT DE MANUTENTION POUR LOURDES CHARGES

(30) Priorität: 29.10.2015 DE 102015118535
(43) Veröffentlichungstag der Anmeldung: 05.09.2018
(73) Patentinhaber: Konecranes Global Corporation, 05830 Hyvinkää (FI)
(72) Erfinder: HEGEWALD, Mike, 40597 Düsseldorf (DE); THEIßEN, Lars Michael, 41363 Jüchen (DE); ISHORST, Heinz, 40597 Düsseldorf (DE)
(74) Vertreter: Moser Götze & Partner Patentanwälte mbB
(86) Internationale Anmeldenummer: PCT/EP2016/075949
(87) Internationale Veröffentlichungsnummer: WO 2017/072241

(56) Entgegenhaltungen:
- EP-A1- 2 702 003
- EP-A2- 1 403 130
- CN-A- 102 826 000
- CN-A- 103 359 619
- CN-U- 202 609 873
- US-A1- 2011 137 503

## Beschreibung

Die Erfindung betrifft einen Schwerlaststapler, der als Mastgerät mit einem Mast ausgebildet ist, wobei an dem Mast ein Lastaufnahmemittel heb- und senkbar angeordnet ist und der Schwerlaststapler mindestens für eine maximale Traglast von 8t ausgelegt ist, wobei der Schwerlaststapler einen Antriebsstrang mit einem Fahrantrieb aufweist.

Schwerlaststapler im Sinne der vorliegenden Erfindung sind Fahrzeuge, die zur Handhabung von schweren Lasten wie Containern, insbesondere ISO-Containern, oder Stückgütern insbesondere in Containerterminals eingesetzt werden. Hierfür sind derartige Schwerlaststapler für maximale Traglasten von mindestens 8t und bis zu 52t ausgelegt.

Schwerlaststapler weisen in der Regel an ihrem vorderen Ende einen als Hubgerüst dienenden und sich im Wesentlichen vertikal erstreckenden Mast auf und werden daher auch als Mastgeräte bezeichnet. An der Vorderseite des Schwerlaststaplers und insbesondere an der Vorderseite des Masts ist ein Lastaufnahmemittel entlang des Masts heb- und senkbar angeordnet.

Wenn der Schwerlaststapler als Containerstapler eingesetzt wird, ist das Lastaufnahmemittel in der Regel als Containergeschirr ausgebildet, das auch als Spreader oder Spreaderrahmen bezeichnet wird und beispielsweise über so genannte Twistlocks an genormten Eckbeschlägen der aufzunehmenden Container befestigt werden kann. In Bezug auf Containerstapler kann außerdem zwischen Leercontainerstaplern zur Handhabung von leeren ISO-Containern und Vollcontainerstaplern zur Handhabung von ISO-Containern unterschieden werden. Leercontainerstapler sind für eine maximale Traglast von 8t bis 10t und Vollcontainerstapler für eine maximale Traglast von 30t bis 40t ausgelegt.

Alternativ kann der Schwerlaststapler auch als Gabelstapler mit einem von Gabelzinken gebildeten Lastaufnahmemittel ausgebildet sein. Außerdem kann das Lastaufnahmemittel in Form von Coil-Dornen, Magneten oder Verriegelungsklammern ausgebildet sein. Bei derartigen Schwerlaststaplern beträgt die maximale Traglast 15t bis 52t.

Die von der vorliegenden Erfindung umfassten Schwerlaststapler sind aufgrund des zuvor beschriebenen Aufbaus insbesondere von Portalhubgeräten zu unterscheiden, die auch als Straddle Carrier beispielsweise aus der deutschen Offenlegungsschrift DE 10 2011 001 847 A1 bekannt sind. Anders als Portalhubgeräte, deren Lastaufnahmemittel zwischen dem vorderen und dem hinteren Ende ihres spinnenbeinartigen Aufbaus angeordnet ist, können Schwerlaststapler einen Container oder einen Containerstapel für die Aufnahme oder das Absetzen eines Containers nicht überfahren, sondern nur an eine Seite, insbesondere an die Längsseite, eines Containers beziehungsweise Containerstapels heranfahren.

Auch sind die Schwerlaststapler im Sinne der vorliegenden Erfindung von so genannten Greifstaplern (Reach Stackern) zu unterscheiden, da diese keinen als Hubgerüst dienenden Mast, sondern einen in der Regel teleskopierbaren und schräg nach vorn ausgerichteten Ausleger aufweisen, an dessen Spitze ein entsprechendes Lastaufnahmemittel befestigt ist. Hierbei beträgt der veränderliche Winkel zwischen einer Vertikalen und dem Ausleger in der Regel nicht weniger als etwa 20 Grad. Greifstapler mit elektrischen Antrieben sind beispielsweise aus der CN 103 350 954 A und der CN 103 359 619 A bekannt.

Des Weiteren sind derartige Schwerlaststapler von konventionellen Gabelstaplern zu unterscheiden, die nicht zur Handhabung der vorgenannten Lasten und Traglastbereiche ausgebildet beziehungsweise ausgelegt sind. Aus der DE 10 2008 029 141 A1 ist ein derartiger Gabelstapler mit einem Hybridantrieb bekannt. Weitere Gabelstapler sind beispielsweise aus den Dokumenten DE 10 2008 022 487 A1, DE 10 2006 030 945 A1, DE 10 2004 028 620 A1 und DE 10 2008 058 847 A1 bekannt. Die CN 102 826 000 A offenbart den Oberbegriff des unabhängigen Anspruchs 1.

Aus dem Terex-Prospekt "ACES FOR YOUR STACK" (abrufbar über http://www.terex.com/port-solutions/de/products/lift-trucks/empty-containerhandlers/index.htm) ist bekannt, einen als Leercontainerstapler ausgebildeten Schwerlaststapler diesel-hydraulisch zu betreiben. Der Antriebsstrang eines derartigen Schwerlaststaplers umfasst für seinen Fahrantrieb üblicherweise einen Dieselmotor und ein Verteilergetriebe, das mit einem Wandler und einem Automatikgetriebe wirkverbunden ist, um die Antriebsachse anzutreiben.

Der Erfindung liegt die Aufgabe zugrunde, einen verbesserten Schwerlaststapler bereit zu stellen, der einen höheren energetischen Wirkungsgrad aufweist.

Diese Aufgabe wird durch einen Schwerlaststapler mit den Merkmalen des Anspruchs 1 gelöst. In den abhängigen Ansprüchen 2 bis 13 sind vorteilhafte Ausgestaltungen der Erfindung angegeben.

Ein Schwerlaststapler, der als Mastgerät mit einem Mast ausgebildet ist, wobei an dem Mast ein Lastaufnahmemittel heb- und senkbar angeordnet ist und der Schwerlaststapler mindestens für eine maximale Traglast von 8t ausgelegt ist, wobei der Schwerlaststapler einen Antriebsstrang mit einem Fahrantrieb aufweist, wird dadurch verbessert, dass der Fahrantrieb eine elektrische Antriebseinheit umfasst. Da die Leistungsaufnahme des Fahrantriebs bei konventionellen dieselbetriebenen Schwerlaststaplern etwa 70 Prozent der gesamten Leistungsaufnahme aller vom Antriebsstrang angetriebenen Funktionen beträgt, lässt sich durch den Einsatz eines erfindungsgemäß elektrifizierten Fahrantriebs der energetische Wirkungsgrad des Schwerlaststaplers deutlich erhöhen und damit einhergehend eine verringerte Verlustleistung im Vergleich zu bekannten Lösungen realisieren. Dies führt in vorteilhafter Weise zu geringeren Energiekosten beim Einsatz entsprechender Schwerlaststapler.

In vorteilhafter Weise ist vorgesehen, dass die elektrische Antriebseinheit über eine elektrische Leitung an eine Batterie, vorzugsweise eine Bleibatterie, angeschlossen ist, um mit Energie versorgt zu werden. Dadurch lassen sich die Schadstoffemissionen am unmittelbaren Einsatzort reduzieren.

In konstruktiv einfacher Weise ist vorgesehen, dass ein Gleichstromsteller über eine zweite elektrische Leitung an die erste elektrische Leitung angeschlossen ist und an den Gleichstromsteller eine Systembatterie und ein Fahrzeug-Rechner angeschlossen sind.

In vorteilhafter Weise ist vorgesehen, dass die elektrische Antriebseinheit über einen Synchrongenerator und einen Gleichrichter an einen Verbrennungsmotor, insbesondere einen Dieselmotor, angeschlossen ist, um mit Energie versorgt zu werden.

In konstruktiv einfacher Weise ist vorgesehen, dass die elektrische Antriebseinheit eine Baugruppe mit einem Gleichspannungsversorgungsbus, einem hieran angeschlossenen Wechselrichter, einem an den Wechselrichter angeschlossenen Bremswiderstand und einem über den Wechselrichter ansteuerbaren Elektromotor umfasst, der vorzugsweise als Drehstrom-Asynchronmotor ausgebildet ist, und der Elektromotor antriebsmäßig mit einer Antriebsachse des Schwerlaststaplers verbunden ist. In vorteilhafter Weise wird über den Bremswiderstand bei einem generatorischen Bremsbetrieb des Elektromotors vom Elektromotor zurückgespeiste überschüssige Energie absorbiert.

Die Verlustleistung lässt sich weiter dadurch reduzieren, dass die Baugruppe einen Gleichstromsteller und einen Kondensator, insbesondere in Form eines Ultra-Caps, aufweist und der Kondensator über den Gleichstromsteller an den Gleichspannungsversorgungsbus angeschlossen ist. Dadurch kann der Schwerlaststapler beispielsweise beim Bremsen oder Senken des Lastaufnahmemittels auftretende Rekuperationsenergie speichern.

In konstruktiv einfacher Weise ist vorgesehen, dass der Antriebsstrang als weitere Antriebe einen Lenkantrieb, einen Kippantrieb zum Kippen des Masts, einen Hubantrieb zum Heben und Senken des Lastaufnahmemittels, einen Blockierantrieb zum Blockieren einer Hinterachse und/oder einer Vorderachse des Schwerlaststaplers und mindestens einen Zusatzantrieb für eine Funktion des Lastaufnahmemittels umfasst.

Ein zuverlässiger und robuster Aufbau wird dadurch erreicht, dass zumindest einer der weiteren Antriebe als ein Hydraulik-Antrieb ausgebildet ist, der eine Hydraulikpumpe umfasst.

In konstruktiv einfacher Weise ist vorgesehen, dass zumindest einer der weiteren Antriebe an ein Verteilergetriebe angeschlossen ist, das mit dem Verbrennungsmotor wirkverbunden ist.

Der Anteil der Elektrifizierung des Antriebsstrangs mit den oben genannten Vorteilen wird weiter dadurch erhöht, dass zumindest einer der weiteren Antriebe eine elektrische Antriebseinheit mit einem Wechselrichter und einem über den Wechselrichter ansteuerbaren Elektromotor, der vorzugsweise als Drehstrom-Asynchronmotor ausgebildet ist, aufweist und der weitere Antrieb über den Wechselrichter an den Gleichspannungsversorgungsbus angeschlossen ist.

In konstruktiv einfacher Weise ist vorgesehen, dass der Hubantrieb hydraulikfrei ausgebildet ist und vorzugsweise eine elektrische Antriebseinheit mit einem Wechselrichter und einem über den Wechselrichter ansteuerbaren Elektromotor, der vorzugsweise als Drehstrom-Asynchronmotor ausgebildet ist, aufweist und die elektrische Antriebseinheit über den Wechselrichter an den Gleichspannungsversorgungsbus angeschlossen ist und der Elektromotor antriebsmäßig mit einer Hubvorrichtung verbunden ist, um deren vorzugsweise als Seil, Kette oder Band ausgebildetes Hubmittel anzutreiben und hierüber das Lastaufnahmemittel zu heben oder zu senken.

In konstruktiv einfacher Weise ist vorgesehen, dass ein Lüfter über einen Wechselrichter an den Gleichspannungsversorgungsbus angeschlossen ist.

In vorteilhafter Weise ist vorgesehen, dass der Schwerlaststapler als Containerstapler, insbesondere als Leercontainerstapler, ausgebildet ist, dessen Lastaufnahmemittel als Spreaderrahmen ausgebildet ist.

Ein Ausführungsbeispiel der Erfindung wird anhand der nachfolgenden Beschreibung näher erläutert. Es zeigen:
Figur 1 eine Ansicht eines Schwerlaststaplers,
Figur 2 eine schematische Darstellung eines Antriebsstrangs des Schwerlaststaplers aus Figur 1 in einer ersten Ausführungsform,
Figur 3 eine schematische Darstellung eines Antriebsstrangs des Schwerlaststaplers aus Figur 1 in einer zweiten Ausführungsform,
Figur 4 eine schematische Darstellung eines Antriebsstrangs des Schwerlaststaplers aus Figur 1 in einer dritten Ausführungsform und
Figur 5 eine schematische Darstellung eines Antriebsstrangs des Schwerlaststaplers aus Figur 1 in einer vierten Ausführungsform.

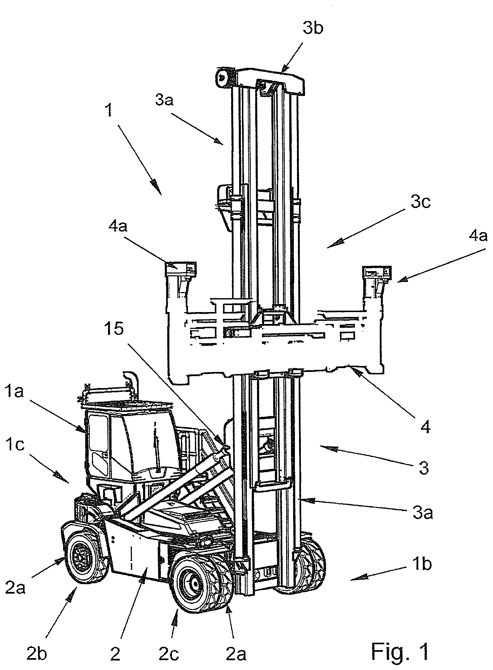

Die Figur 1 zeigt eine schematische Ansicht eines Schwerlaststaplers 1. Der Schwerlaststapler 1 ist in Figur 1 beispielhaft als Leercontainerstapler ausgebildet. Die nachfolgend beschriebenen Merkmale der vorliegenden Erfindung gelten jedoch in gleicher Weise auch, wenn der Schwerlaststapler 1 nicht als Leercontainerstapler, sondern beispielsweise als Vollcontainerstapler oder Gabelstapler im eingangs definierten Sinne ausgebildet ist und dementsprechend einen anderen maximalen Traglastbereich beziehungsweise ein anderes Lastaufnahmemittel aufweist.

Der Schwerlaststapler 1 umfasst im Wesentlichen ein Fahrgestell 2, über dessen Räder 2a der Schwerlaststapler 1 auf einem Boden frei verfahrbar ist. Hierbei sind die Räder 2a vorzugsweise nicht mit einer Vollgummibereifung, sondern mit Pneus versehen, das heißt mit einer mit Luft oder anderen Gasen befüllten Gummibereifung. Die Räder 2a sind an einer Hinterachse 2b sowie an einer Vorderachse 2c angeordnet. Vorzugsweise dient die Vorderachse 2c als Antriebsachse und die Hinterachse 2b als Lenkachse zum Verfahren und Manövrieren des Schwerlaststaplers 1. Die Antriebsachse umfasst ein Differential- sowie Planetengetriebe und ist vorzugsweise mit einer Zwillingsbereifung versehen. Außerdem trägt das Fahrgestell 2 eine Fahrerkabine 1a für eine mitfahrende Bedienperson des Schwerlaststaplers 1.

An seinem vorderen Ende 1b der beiden in Fahrtrichtung orientierten Enden 1b, 1c des Schwerlaststaplers 1, insbesondere im Bereich der Vorderachse 2c, ist ein als Hubgerüst dienender Mast 3 angeordnet, der sich am Fahrgestell 2 abstützt. Daher wird der Schwerlaststapler 1 auch als Mastgerät bezeichnet. Der Mast 3 umfasst zwei längliche Träger 3a, die sich mit ihrer Längserstreckung im Wesentlichen entlang einer gedachten Vertikalen erstrecken und in Richtung der Längserstreckung der Vorderachse 2c gesehen voneinander beabstandet und parallel zueinander angeordnet sind. Die Träger 3a sind entlang ihrer Längserstreckung über voneinander beabstandete Querstreben 3b miteinander verbunden, um den gerüstartigen Aufbau des Masts 3 zu bilden. Die Träger 3a können in Richtung ihrer Längserstreckung teleskopierbar ausgebildet sein.

An dem Mast 3 ist ein Lastaufnahmemittel in Form eines Spreaderrahmens 4 angebracht und entlang des Masts 3 heb- und senkbar. Der Mast 3 beziehungsweise dessen beide Träger 3a dienen hierbei als eine Art Führung für das Lastaufnahmemittel. Hierbei ist das Lastaufnahmemittel im Bereich des vorderen Endes 1b an der Vorderseite des Schwerlaststaplers 1 und insbesondere an einer vom hinteren Ende 1c des Schwerlaststaplers 1 abgewandten vorderen Seite 3c des Masts 3 angeordnet. Außerdem ist der Mast 3 zusammen mit dem Lastaufnahmemittel gegenüber der Vertikalen in Richtung des hinteren Endes 1c des Schwerlaststaplers 1 zur Hinterachse 2c nach hinten oder hiervon weg nach vorn kippbar. Hierbei sind nach vorn und nach hinten Winkelbereiche von weniger als 15 Grad, vorzugsweise nur bis zu etwa 5 Grad, möglich, so dass sich die mögliche Auslenkung deutlich von der Auslenkung des Auslegers eines Reach Stackers unterscheidet.

Über den Spreaderrahmen 4 kann ein nicht dargestellter Container, insbesondere ein so genannter ISO-Container mit genormten Eckbeschlägen, aufgenommen werden. Hierfür wird der Spreaderrahmen 4 durch entsprechendes Verfahren des Schwerlaststaplers 1 an den aufzunehmenden Container heranbewegt, um obere Eckbeschläge des Containers zu greifen. Der Spreaderrahmen 4 kann hierbei über so genannte Twistlocks in obere Eckbeschläge des Containers eingreifen und hiermit verriegelt werden.

Bei dem vorliegend als Leercontainerstapler ausgebildeten Schwerlaststapler 1 weist der Spreaderrahmen 4 nur zwei Verriegelungspunkte 4a auf, an denen über jeweils einen Twistlock ein Eckbeschlag eines aufzunehmenden Containers befestigt wird. Der Spreaderrahmen 4 ist insbesondere so ausgebildet, dass zwei obere Eckbeschläge einer Längsseite des entsprechenden Containers aufgenommen werden und hierbei der Spreaderrahmen 4 an der Längsseite beziehungsweise der zugehörigen vertikalen Seitenwand des Containers angeordnet ist, wenn der Container am Spreaderrahmen 4 befestigt ist. Mit seinem unteren Bereich der Seitenwand ist der aufgenommene Container nicht mit dem Spreaderrahmen 4 verriegelt, stützt sich aber an dem Spreaderrahmen 4 ab. Der Spreaderrahmen 4 erstreckt sich somit im Wesentlichen in einer vertikalen Ebene parallel zur Seitenwand des Containers.

Alternativ kann der Spreaderrahmen 4, insbesondere im Fall eines als Vollcontainerstapler ausgebildeten Schwerlaststapler 1, vier Verriegelungspunkte 4a aufweisen. Hierbei können alle vier oberen Eckbeschläge eines Containers aufgenommen werden und der Spreaderrahmen 4 ist an der Oberseite des Containers angeordnet, wenn der Container am Spreaderrahmen 4 befestigt ist. Der Spreaderrahmen 4 erstreckt sich dann im Wesentlichen in einer horizontalen Ebene parallel zur Oberseite des Containers.

Bei einem als Leercontainerstapler ausgebildeten Schwerlaststapler 1 kann der Spreaderrahmen 4 auch als so genannter "double box spreader" ausgebildet sein, mit dem zwei übereinander gestapelte leere Container aufgenommen werden können. Der Spreaderrahmen 4 ähnelt in einer nachfolgend beispielhaft erläuterten Ausführungsform dem zuvor beschriebenen Spreaderrahmen 4 in Bezug auf seine längsseitige Anordnung an den Seitenwänden der aufzunehmenden Container. Allerdings werden die die an der entsprechenden Längsseite übereinander liegenden Eckbeschläge der beiden Container von außen gegriffen, ohne dass hierbei in die Eckbeschläge eingreifende Twistlocks verwendet werden. Außerdem weist der Spreaderrahmen 4 zwei als Greifelemente dienende und in Richtung der Längsseite voneinander beabstandete Klemmhalter auf, über die Eckbereiche des oberen Containers umgriffen werden. In jedem Eckbereich liegt ein Klemmhalter an der längsseitigen und der zugehörigen schmalseitigen Seitenwand an.

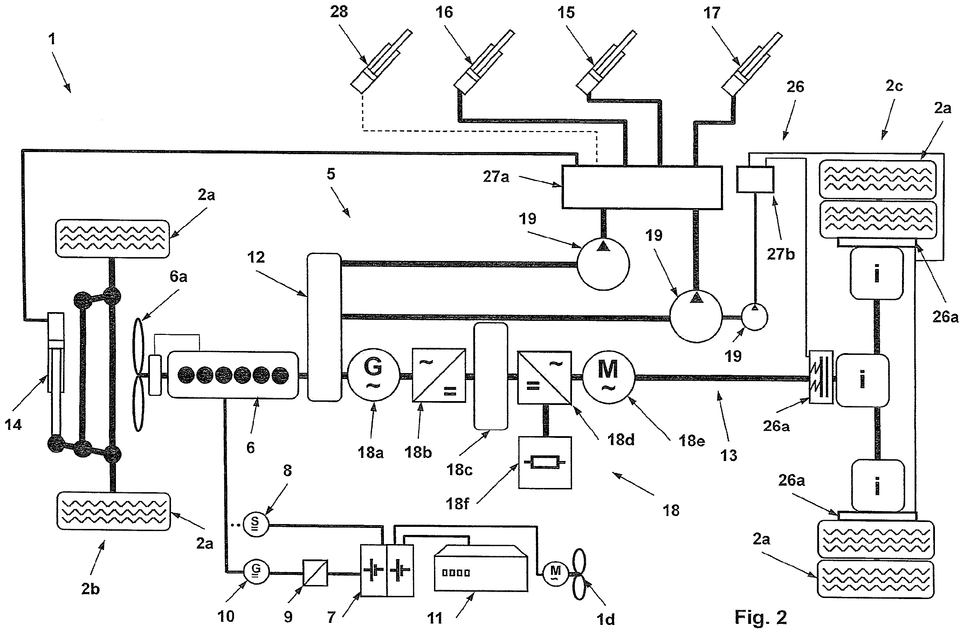

Die Figur 2 zeigt eine schematische Darstellung eines Antriebsstrangs 5 des Schwerlaststaplers 1 aus Figur 1 in einer ersten Ausführungsform. Über den Antriebsstrang 5 können zahlreiche Funktionen des Schwerlaststaplers 1 und insbesondere zahlreiche Funktionen von dessen Mast 3 betrieben und die hierfür jeweils vorgesehenen Antriebe mit der benötigten Energie versorgt werden.

Eingangsseitig umfasst der Antriebsstrang 5 einen vorzugsweise als Dieselmotor 6 ausgebildeten Verbrennungsmotor mit einem temperaturgesteuerten Lüfter 6a. Der Dieselmotor 6 lässt sich über einen mit einer Starterbatterie 7 verbundenen Starter 8 starten. Außerdem ist der Dieselmotor 6 mechanisch mit einer Lichtmaschine 10 verbunden, um diese anzutreiben. Die Lichtmaschine 10 ist außerdem mittels einer elektrischen Verbindung über einen Laderegler 9 an die Starterbatterie 7 angeschlossen, um hiervon gespeist zu werden. Die Starterbatterie 7 versorgt auch einen Fahrzeug-Rechner 11 des Schwerlaststaplers 1 sowie weitere elektromotorbetriebene Lüfter 1d mit elektrischer Energie.

Um die nachfolgend näher beschriebenen Funktionen des Schwerlaststaplers 1 über den Antriebsstrang 5 betreiben und ansteuern zu können, umfasst der Antriebsstrang 5 außerdem ein ausgangsseitig an den Dieselmotor 6 angeschlossenes Verteilergetriebe 12. Die nachfolgenden Funktionen werden jeweils über einen eigenen Antrieb realisiert, der über das Verteilergetriebe 12 mit dem Antriebsstrang 5 in Wirkverbindung steht. Insbesondere umfasst der Antriebsstrang 5 für die Funktion "Fahren" einen Fahrantrieb 13 und als weitere Antriebe für die Funktion "Lenken" einen mit der als Lenkachse ausgebildeten Hinterachse 2b verbundenen Lenkantrieb 14, für die Funktion "Mast kippen" in Bezug auf den Mast 3 einen Kippantrieb 15 (siehe auch Figur 1), für die Funktion "Heben" in Bezug auf das Lastaufnahmemittel beziehungsweise den Spreaderrahmen 4 einen Hubantrieb 16 sowie für einige Zusatzfunktionen des Spreaderrahmens 4 diverse Zusatzantriebe 17. Eine erste Zusatzfunktion ist "Sideshift", wobei über einen der Zusatzantriebe 17 der Spreaderrahmen 4 in Richtung seiner Längserstreckung und damit im Wesentlichen quer zur Fahrtrichtung des Schwerlaststaplers 1 und parallel zur Längserstreckung eines aufzunehmenden Containers verschiebbar ist, um den Spreaderrahmen 4 mit den Eckbeschlägen des Containers in Deckung zu bringen. Anschließend kann über eine zweite Zusatzfunktion "Twistlocks" mittels eines weiteren Zusatzantriebs 17 die Verriegelung der Twistlocks vorgenommen werden. Auch das oben beschriebene Ergreifen der Container mittels eines als "double box spreader" ausgebildeten Spreaderrahmens 4 erfolgt über einen entsprechenden Zusatzantrieb 17, welcher mit dem für die zweite Zusatzfunktion vorgesehenen identisch sein kann. Eine dritte Zusatzfunktion ist "Teleskopieren", wofür die einander in Längserstreckung des Spreaderrahmens 4 gegenüberliegenden Enden des Spreaderrahmens 4 teleskopierbar ausgebildet sind. Über entsprechende Zusatzantriebe 17 können die teleskopierbaren Enden insbesondere in Richtung der Längserstreckung des Spreaderrahmens 4 ausgefahren beziehungsweise eingefahren werden, um den Spreaderrahmen 4 so auf verschiedene Größen und insbesondere Längen von aufzunehmenden Containern einzustellen. Im Falle von ISO-Containern sind beispielweise Längen von 20, 30, 40 oder 45 Fuß üblich. Wenn das Lastaufnahmemittel Gabelzinken umfasst, kann in analoger Weise der Abstand der Gabelzinken zueinander über die Zusatzantriebe 17 verstellt werden.

Um den Schwerlaststapler 1 aus einer fahrenden Bewegung heraus abzubremsen beziehungsweise zum Stillstand zu bringen oder im Stillstand zu halten, ist eine Funktion "Bremsen" vorgesehen. Zur Realisierung der Funktion "Bremsen" sind im Bereich der als Antriebsachse ausgebildeten Vorderachse 2c Bremsen 26a, insbesondere an den Rädern 2a sowie am Differentialgetriebe jeweils eine Bremse 26a, angeordnet, die über einen Bremsantrieb 26 betrieben werden. Um die Funktion "Bremsen" bei einem stillstehenden Schwerlaststaplers 1 beispielsweise während der Aufnahme oder dem Absetzen eines Containers zu unterstützen, kann zusätzlich noch über einen mit dem Antriebsstrang 5 in Wirkverbindung stehenden Blockierantrieb 28 "Achsblockieren" als optionale Funktion vorgesehen werden, über den die Hinterachse 2b und/oder die Vorderachse 2c im Stillstand des Schwerlaststaplers 1 blockiert werden können.

Anders als bei herkömmlichen Schwerlaststaplern 1 umfasst der am Ausgang des Verteilergetriebes 12 angeschlossene Fahrantrieb 13 für die Funktion "Fahren" in der erfindungsgemäßen ersten Ausführungsform keinen Wandler mit einem Automatikgetriebe mehr. Stattdessen umfasst der Fahrantrieb 13 eine elektrische Antriebseinheit und ist somit zumindest teilweise elektrisch, nämlich insbesondere diesel-elektrisch, ausgebildet. Die elektrische Antriebseinheit weist eine zwischen dem Verteilergetriebe 12 und der Antriebsachse angeordnete Baugruppe 18 auf. Die Baugruppe 18 umfasst einen auch als DC-Bus bezeichneten Gleichspannungsversorgungsbus 18c, einen ersten Wechselrichter 18d, einen vorzugsweise als Drehstrom-Asynchronmotor ausgebildeten ersten Elektromotor 18e sowie einen Bremswiderstand 18f zur Absorption von überschüssiger Energie bei einem generatorischen Bremsbetrieb des ersten Elektromotors 18e. Sowohl der erste Elektromotor 18e als auch der Bremswiderstand 18f sind über den ersten Wechselrichter 18d an den Gleichspannungsversorgungsbus 18c angeschlossen. Der erste Elektromotor 18e steht antriebsmäßig in mechanischer Wirkverbindung mit der Antriebsachse, um hierüber die Räder 2a anzutreiben. Über einen mit dem Verteilergetriebe 12 in Wirkverbindung stehenden Synchrongenerator 18a und einen hiermit verbunden Gleichrichter 18b ist die elektrische Antriebseinheit beziehungsweise deren Baugruppe 18 und insbesondere deren Gleichspannungsversorgungsbus 18c an das Verteilergetriebe 12 angeschlossen, um hierüber angetrieben beziehungsweise mit Energie versorgt zu werden.

In der ersten Ausführungsform ist nur der Fahrantrieb 13 diesel-elektrisch ausgebildet. Die übrigen vorgenannten weiteren Antriebe des Antriebsstrangs 5 sind diesel-hydraulisch ausgebildet. Hierfür sind der Lenkantrieb 14, der Kippantrieb 15 (siehe auch Figur 1), der Hubantrieb 16, der optionale Blockierantrieb 28 und die Zusatzantriebe 17 jeweils als Hydraulik-Antriebe ausgebildet und an ein erstes Hydrauliksystem 27a angeschlossen, das von einer oder mehreren Hydraulikpumpen 19 gespeist wird. Hierbei sind die Hydraulikpumpen 19 an das mit dem Dieselmotor 6 in Wirkverbindung stehende Verteilergetriebe 12 angeschlossen und können hierüber angetrieben werden. Für den Bremsantrieb 26 ist ein vom ersten Hydrauliksystem 27a unabhängiges zweites Hydrauliksystem 27b mit einer Hydraulikpumpe 19 vorgesehen, die ebenfalls über das Verteilergetriebe 12 angetrieben wird.

Da die Leistungsaufnahme der Funktion "Fahren" beziehungsweise des Fahrantriebs 13 bei konventionellen dieselbetriebenen Schwerlaststaplern etwa 70 Prozent der gesamten Leistungsaufnahme aller vom Antriebsstrang 5 angetriebenen Funktionen beträgt, lässt sich durch den Einsatz eines wie oben beschrieben diesel-elektrischen Fahrantriebs 13 der energetische Wirkungsgrad des Schwerlaststaplers 1 erheblich verbessern.

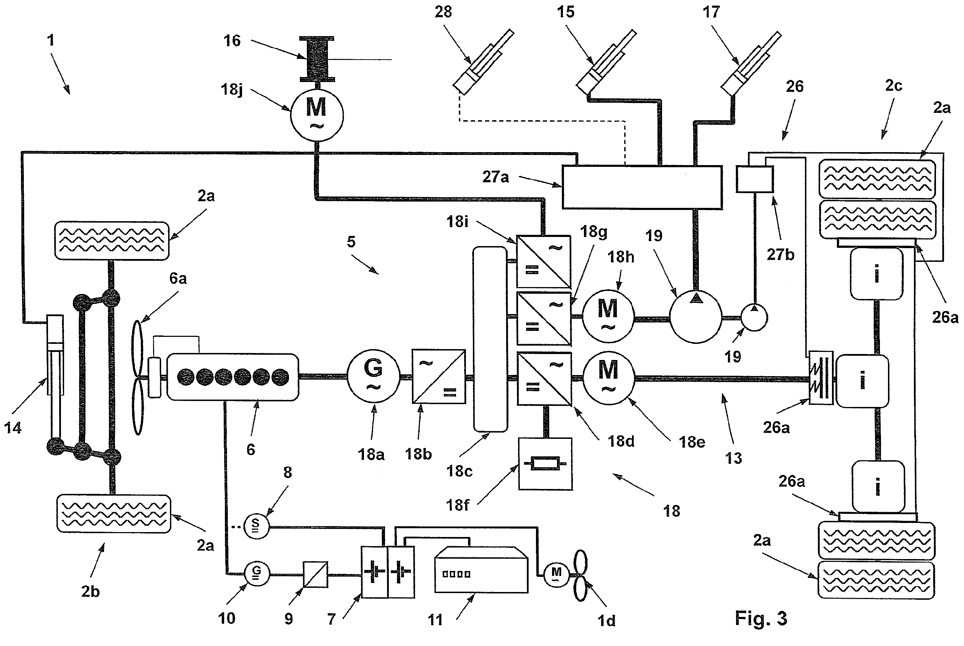

Die Figur 3 zeigt eine schematische Darstellung eines Antriebsstrangs 5 des Schwerlaststaplers 1 aus Figur 1 in einer zweiten Ausführungsform. Der Antriebsstrang 5 in der zweiten Ausführungsform entspricht der ersten Ausführungsform bis auf die nachfolgend beschriebenen Unterschiede.

In der zweiten Ausführungsform wurde das in der ersten Ausführungsform vorgesehene Verteilergetriebe 12 eliminiert. Außerdem sind neben dem Fahrantrieb 13 die weiteren Antriebe teilweise elektrisch ausgebildet und an den Gleichspannungsversorgungsbus 18c angeschlossen. Hierfür umfasst der Antriebsstrang 5 eine weitere elektrische Antriebseinheit mit einem vorzugsweise als Drehstrom-Asynchronmotor ausgebildeten zweiten Elektromotor 18h und einem zweiten Wechselrichter 18g, über den der zweite Elektromotor 18h an den Gleichspannungsversorgungsbus 18c angeschlossen ist. Über den zweiten Elektromotor 18h ist es möglich, eine oder mehrere Hydraulikpumpen 19 für die beiden Hydrauliksysteme 27a, 27b und somit für den Lenkantrieb 14, den Kippantrieb 15, den Hubantrieb 16, den Blockierantrieb 28 und/oder die Zusatzantriebe 17 anzusteuern und anzutreiben.

Zusätzlich kann wie in Figur 3 dargestellt bei der zweiten Ausführungsform auch der Hubantrieb 16 eine eigene elektrische Antriebseinheit umfassen, um den in der ersten Ausführungsform hierfür vorgesehenen Hydraulik-Antrieb zu ersetzen. In diesem Fall umfasst die hierfür vorgesehene elektrische Antriebseinheit des Antriebsstrangs 5 einen vorzugsweise als Drehstrom-Asynchronmotor ausgebildeten dritten Elektromotor 18j und einen dritten Wechselrichter 18i, über den der dritte Elektromotor 18j an den Gleichspannungsversorgungsbus 18c angeschlossen ist. Über den dritten Elektromotor 18j wird anstelle eines Hydraulik-Antriebs mit einer Hydraulikpumpe 19 eine Hubvorrichtung beziehungsweise deren beispielsweise als Seil, Kette oder Band ausgebildetes Hubmittel angetrieben, um das Lastaufnahmemittel zu heben beziehungsweise zu senken. Der Hubantrieb 16 ist somit hydraulikfrei als diesel-elektrischer Antrieb ausgebildet.

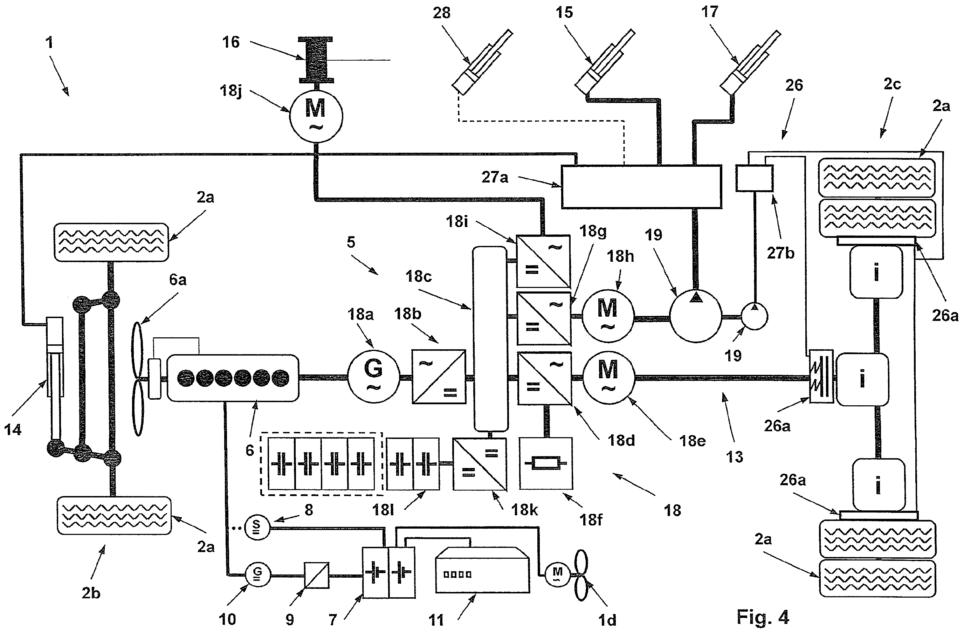

Die Figur 4 zeigt eine schematische Darstellung eines Antriebsstrangs 5 des Schwerlaststaplers 1 aus Figur 1 in einer dritten Ausführungsform. Für die dritte Ausführungsform gelten die zur zweiten Ausführungsform oben erfolgten Ausführungen analog. Zusätzlich sind jedoch noch ein Gleichstromsteller 18k und mindestens ein als Ultra-Cap 18l ausgebildeter Kondensator vorgesehen, der über den Gleichstromsteller 18k an den Gleichspannungsversorgungsbus 18c angeschlossen ist, um rückgewonnene Bremsenergie speichern zu können, die beim generatorischen Bremsen der Elektromotoren 18e, 18h und/oder 18j in den Gleichspannungsversorgungsbus 18c gespeist wird.

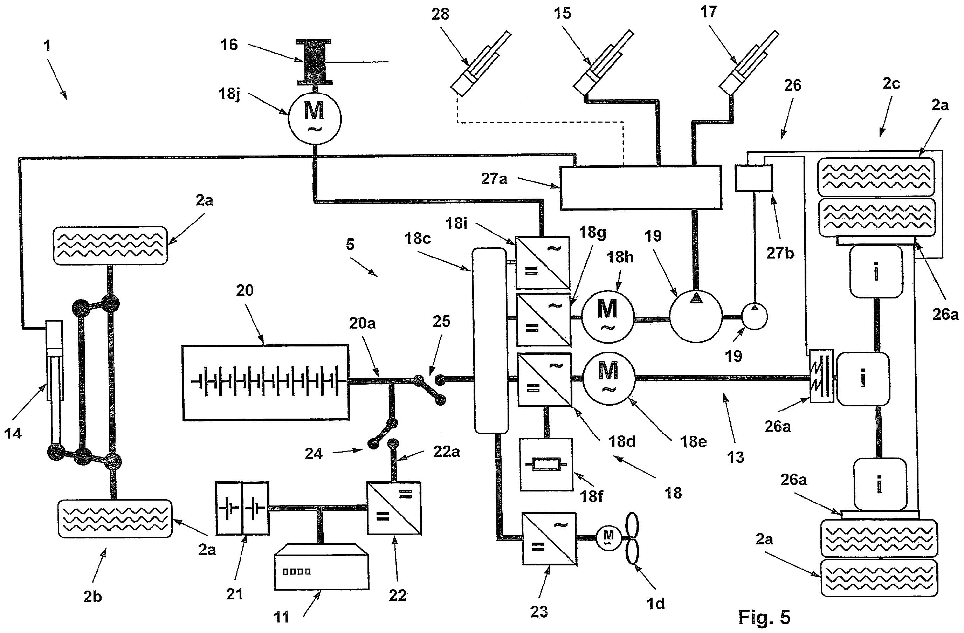

Die Figur 5 zeigt eine schematische Darstellung eines Antriebsstrangs 5 des Schwerlaststaplers 1 aus Figur 1 in einer vierten Ausführungsform. Gegenüber den vorherigen Ausführungsformen wurde der Dieselmotor 6 eliminiert und durch eine vorzugsweise als Bleibatterie 20 ausgebildete Batterie ersetzt. Dadurch können die Baugruppe 18 und die weiteren elektrischen Antriebseinheiten in der vierten Ausführungsform ohne Synchrongenerator 18a und ohne Gleichrichter 18b mit elektrischer Energie versorgt werden. Hierfür ist der Gleichspannungsversorgungsbus 18c unmittelbar über eine entsprechende erste elektrische Leitung 20a an die Bleibatterie 20 angeschlossen. Aufgrund des Wegfalls des Dieselmotors 6 sind in der vierten Ausführungsform auch keine Starterbatterie 7, kein Starter 8, kein Laderegler 9 und keine Lichtmaschine 10 mehr erforderlich. An deren Stelle sind eine Systembatterie 21 und ein Gleichstromsteller 22 vorgesehen. Hierbei sind sowohl die Systembatterie 21 als auch der Fahrzeug-Rechner 11 an den Gleichstromsteller 22 angeschlossen, der wiederum über eine zweite elektrische Leitung 22a mit der ersten elektrischen Leitung 20a verbunden ist. Die mittels der zweiten elektrischen Leitung 22a vorgesehene Anbindung des Gleichstromstellers 22 an die Bleibatterie 20 sowie an den Gleichspannungsversorgungsbus 18c ist über einen Schalter 24 trennbar beziehungsweise wieder herstellbar. Über einen weiteren Schalter 25 in der ersten elektrischen Leitung 20a ist die Anbindung der Bleibatterie 20 an den Gleichspannungsversorgungsbus 18c trennbar beziehungsweise wieder herstellbar. Die elektromotorbetriebenen Lüfter 1d sind in der vierten Ausführungsform über einen Wechselrichter 23 an den Gleichspannungsversorgungsbus 18c angeschlossen.

Für die Gleichstromsteller 18k und 22 sind auch die Bezeichnungen Gleichspannungswandler oder DC-DC-Wandler und je nach Wandlungsart Aufwärtswandler oder Hochsetzsteller beziehungsweise Abwärtswandler oder Tiefsetzsteller üblich.

Optional kann bei der vierten Ausführungsform analog zur dritten Ausführungsform ein Gleichstromsteller 18k und mindestens ein Kondensator beispielsweise in Form eines Ultra-Caps 18l ergänzt werden.

In der vierten Ausführungsform ist der Fahrantrieb 13 und optional auch der Hubantrieb 16 wie in den Figuren 3 bis 5 dargestellt voll-elektrisch und somit sowohl dieselfrei als auch hydraulikfrei ausgebildet. Die weiteren Antriebe sind in der vierten Ausführungsform dieselfrei und elektro-hydraulisch ausgebildet.

Grundsätzlich sind die zuvor beschriebenen Ausführungsformen auch miteinander kombinierbar. Beispielsweise ist eine Kombination der ersten und vierten Ausführungsform derart denkbar, dass anstelle des Dieselmotors 6 und des Verteilergetriebes 12 eine Batterie beziehungsweise Bleibatterie 20 als Energiequelle eingesetzt wird, wobei der Hubantrieb 16 elektro-hydraulisch ausgebildet ist und dementsprechend sowohl eine elektrische Antriebseinheit mit den oben anhand von Figur 3 beschriebenen Komponenten als auch einen hierüber ansteuerbaren Hydraulik-Antrieb gemäß Figur 2 aufweist.

### Bezugszeichenliste

- 1: Schwerlaststapler
- 1a: Fahrerkabine
- 1b: vorderes Ende
- 1c: hinteres Ende
- 1d: Lüfter
- 2: Fahrgestell
- 2a: Rad
- 2b: Hinterachse
- 2c: Vorderachse
- 3: Mast
- 3a: Träger
- 3b: Querstrebe
- 3c: vordere Seite
- 4: Spreaderrahmen
- 4a: Verriegelungspunkt
- 5: Antriebsstrang
- 6: Dieselmotor
- 6a: Lüfter
- 7: Starterbatterie
- 8: Starter
- 9: Laderegler
- 10: Lichtmaschine
- 11: Fahrzeug-Rechner
- 12: Verteilergetriebe
- 13: Fahrantrieb
- 14: Lenkantrieb
- 15: Kippantrieb
- 16: Hubantrieb
- 17: Zusatzantrieb
- 18: Baugruppe
- 18a: Synchrongenerator
- 18b: Gleichrichter
- 18c: Gleichspannungsversorgungsbus
- 18d: erster Wechselrichter
- 18e: erster Elektromotor
- 18f: Bremswiderstand
- 18g: zweiter Wechselrichter
- 18h: zweiter Elektromotor
- 18i: dritter Wechselrichter
- 18j: dritter Elektromotor
- 18k: Gleichstromsteller
- 18l: Ultra-Cap
- 19: Hydraulikpumpe
- 20: Bleibatterie
- 20a: erste elektrische Leitung
- 21: Systembatterie
- 22: Gleichstromsteller
- 22a: zweite elektrische Leitung
- 23: Wechselrichter
- 24: Schalter
- 25: Schalter
- 26: Bremsantrieb
- 26a: Bremse
- 27a: erstes Hydrauliksystem
- 27b: zweites Hydrauliksystem
- 28: Blockierantrieb

## Patentansprüche

1. Schwerlaststapler (1), der als Mastgerät mit einem Mast (3) ausgebildet ist, wobei an dem Mast (3) ein Lastaufnahmemittel heb- und senkbar angeordnet ist und der Schwerlaststapler (1) mindestens für eine maximale Traglast von 8t ausgelegt ist, wobei der Schwerlaststapler (1) einen Antriebsstrang (5) mit einem Fahrantrieb (13) aufweist, wobei der Fahrantrieb (13) eine elektrische Antriebseinheit umfasst, **dadurch gekennzeichnet, dass** die elektrische Antriebseinheit eine Baugruppe (18) mit einem Gleichspannungsversorgungsbus (18c), einem hieran angeschlossenen Wechselrichter (18d), einem an den Wechselrichter (18d) angeschlossenen Bremswiderstand (18f) und einem über den Wechselrichter (18d) ansteuerbaren Elektromotor (18e) umfasst und der Elektromotor (18e) antriebsmäßig mit einer Antriebsachse des Schwerlaststaplers (1) verbunden ist.

2. Schwerlaststapler (1) nach Anspruch 1, **dadurch gekennzeichnet, dass** die elektrische Antriebseinheit über eine elektrische Leitung (20a) an eine Batterie, vorzugsweise eine Bleibatterie (20), angeschlossen ist, um mit Energie versorgt zu werden.

3. Schwerlaststapler (1) nach Anspruch 2, **dadurch gekennzeichnet, dass** ein Gleichstromsteller (22) über eine zweite elektrische Leitung (22a) an die erste elektrische Leitung (20a) angeschlossen ist und an den Gleichstromsteller (22) eine Systembatterie (21) und ein Fahrzeug-Rechner (11) angeschlossen sind.

4. Schwerlaststapler (1) nach Anspruch 1, **dadurch gekennzeichnet, dass** die elektrische Antriebseinheit über einen Synchrongenerator (18a) und einen Gleichrichter (18b) an einen Verbrennungsmotor, insbesondere einen Dieselmotor (6), angeschlossen ist, um mit Energie versorgt zu werden.

5. Schwerlaststapler (1) nach einem der Ansprüche 1 bis 4, **dadurch gekennzeichnet, dass** die Baugruppe (18) einen Gleichstromsteller (18k) und einen Kondensator, insbesondere in Form eines Ultra-Caps (18l), aufweist und der Kondensator über den Gleichstromsteller (18k) an den Gleichspannungsversorgungsbus (18c) angeschlossen ist.

6. Schwerlaststapler (1) nach einem der Ansprüche 1 bis 5, **dadurch gekennzeichnet, dass** der Antriebsstrang (5) als weitere Antriebe einen Lenkantrieb (14), einen Kippantrieb (15) zum Kippen des Masts (3), einen Hubantrieb (16) zum Heben und Senken des Lastaufnahmemittels, einen Blockierantrieb (28) zum Blockieren einer Hinterachse (2b) und/oder einer Vorderachse (2c) des Schwerlaststaplers (1) und mindestens einen Zusatzantrieb (17) für eine Funktion des Lastaufnahmemittels umfasst.

7. Schwerlaststapler (1) nach Anspruch 6, **dadurch gekennzeichnet, dass** zumindest einer der weiteren Antriebe als ein Hydraulik-Antrieb ausgebildet ist, der eine Hydraulikpumpe (19) umfasst.

8. Schwerlaststapler (1) nach Anspruch 6 oder 7, **dadurch gekennzeichnet, dass** zumindest einer der weiteren Antriebe an ein Verteilergetriebe (12) angeschlossen ist.

9. Schwerlaststapler (1) nach Anspruch 6 oder 7, **dadurch gekennzeichnet, dass** zumindest einer der weiteren Antriebe eine elektrische Antriebseinheit mit einem Wechselrichter (18g) und einem über den Wechselrichter (18g) ansteuerbaren Elektromotor (18h), der vorzugsweise als Drehstrom-Asynchronmotor ausgebildet ist, aufweist und der weitere Antrieb über den Wechselrichter (18g) an den Gleichspannungsversorgungsbus (18c) angeschlossen ist.

10. Schwerlaststapler (1) nach einem der Ansprüche 6 bis 9, **dadurch gekennzeichnet, dass** der Hubantrieb (16) hydraulikfrei ausgebildet ist und vorzugsweise eine elektrische Antriebseinheit mit einem Wechselrichter (18i) und einem über den Wechselrichter (18i) ansteuerbaren Elektromotor (18j), der vorzugsweise als Drehstrom-Asynchronmotor ausgebildet ist, aufweist und die elektrische Antriebseinheit über den Wechselrichter (18i) an den Gleichspannungsversorgungsbus (18c) angeschlossen ist und der Elektromotor (18j) antriebsmäßig mit einer Hubvorrichtung verbunden ist, um deren vorzugsweise als Seil, Kette oder Band ausgebildetes Hubmittel anzutreiben und hierüber das Lastaufnahmemittel zu heben oder zu senken.

11. Schwerlaststapler (1) nach einem der Ansprüche 1 bis 10, **dadurch gekennzeichnet, dass** ein Lüfter (1d) über einen Wechselrichter (23) an den Gleichspannungsversorgungsbus (18c) angeschlossen ist.

12. Schwerlaststapler (1) nach einem der Ansprüche 1 bis 11, **dadurch gekennzeichnet, dass** der Schwerlaststapler (1) als Containerstapler, insbesondere als Leercontainerstapler, ausgebildet ist, dessen Lastaufnahmemittel als Spreaderrahmen (4) ausgebildet ist.

## Claims

1. Heavy-duty lift truck (1) which is designed as a mast-based apparatus having a mast (3), wherein a load picking-up means is disposed so that it can be raised and lowered on the mast (3) and the heavy-duty lift truck (1) is arranged at least for a maximum load capacity of 8t, wherein the heavy-duty lift truck (1) comprises a power train (5) with a travelling drive (13), wherein the travelling drive (13) comprises an electric drive unit, **characterised in that** the electric drive unit comprises an assembly (18) with a direct voltage supply bus (18c), an inverter (18d) connected thereto, a braking resistor (18f) connected to the inverter (18d) and an electric motor (18e) which can be actuated via the inverter (18d) and the electric motor (18e) is drivingly connected to a driving axle of the heavy-duty lift truck (1).

2. Heavy-duty lift truck (1) as claimed in claim 1, **characterised in that** the electric drive unit is connected via an electric line (20a) to a battery, preferably a lead battery (20), in order to be supplied with power.

3. Heavy-duty lift truck (1) as claimed in claim 2, **characterised in that** a direct current power controller (22) is connected via a second electric line (22a) to the first electric line (20a) and a system battery (21) and a vehicle computer (11) are connected to the direct current power controller (22).

4. Heavy-duty lift truck (1) as claimed in claim 1, **characterised in that** the electric drive unit is connected via a synchronous generator (18a) and a rectifier (18b) to an internal combustion engine, in particular a diesel engine (6), in order to be supplied with power.

5. Heavy-duty lift truck (1) as claimed in any one of claims 1 to 4, **characterised in that** the assembly (18) comprises a direct current power controller (18k) and a capacitor, in particular in the form of an ultra-cap (181), and the capacitor is connected via the direct current power controller (18k) to the direct voltage supply bus (18c).

6. Heavy-duty lift truck (1) as claimed in any one of claims 1 to 5, **characterised in that** the power train (5) comprises, as further drives, a steering drive (14), a tilting drive (15) for tilting the mast (3), a lifting drive (16) for raising and lowering the load picking-up means, a locking drive (28) for locking a rear axle (2b) and/or a front axle (2c) of the heavy-duty lift truck (1) and at least one additional drive (17) for a function of the load picking-up means.

7. Heavy-duty lift truck (1) as claimed in claim 6, **characterised in that** at least one of the further drives is designed as a hydraulic drive which comprises a hydraulic pump (19).

8. Heavy-duty lift truck (1) as claimed in claim 6 or 7, **characterised in that** at least one of the further drives is connected to a power take-off gear (12).

9. Heavy-duty lift truck (1) as claimed in claim 6 or 7, **characterised in that** at least one of the further drives comprises an electric drive unit with an inverter (18g) and an electric motor (18h) which can be actuated via the inverter (18g) and is preferably designed as a three-phase asynchronous motor, and the further drive is connected via the inverter (18g) to the direct voltage supply bus (18c).

10. Heavy-duty lift truck (1) as claimed in any one of claims 6 to 9, **characterised in that** the lifting drive (16) is designed without hydraulic means and preferably comprises an electric drive unit with an inverter (18i) and an electric motor (18j) which can be actuated via the inverter (18i) and is preferably designed as a three-phase asynchronous motor, and the electric drive unit is connected via the inverter (18i) to the direct voltage supply bus (18c) and the electric motor (18j) is drivingly connected to a lifting device in order to drive the lifting means thereof preferably designed as a cable, chain or belt, and by means thereof to raise or lower the load picking-up means.

11. Heavy-duty lift truck (1) as claimed in any one of claims 1 to 10, **characterised in that** a fan (1d) is connected to the direct voltage supply bus (18c) via an inverter (23).

12. Heavy-duty lift truck (1) as claimed in any one of claims 1 to 11, **characterised in that** the heavy-duty lift truck (1) is designed as a container stacker, in particular as an empty container stacker, the load picking-up means of which is designed as a spreader frame (4).

## Revendications

1. Chariot élévateur de charges lourdes (1), conçu comme un dispositif mâté pourvu d'un mât (3), un moyen de réception de charge étant disposé de manière relevable et abaissable sur le mât (3) et le chariot élévateur de charges lourdes (1) étant conçu au moins pour une charge maximale de 8 t, le chariot élévateur de charges lourdes (1) comportant une transmission (5) pourvue d'un système d'entraînement (13), le système d'entraînement (13) comprenant une unité d'entraînement électrique, **caractérisé en ce que** l'unité d'entraînement électrique comporte un ensemble (18) pourvu d'un bus d'alimentation en courant continu (18c), d'un onduleur (18d) relié à celui-ci, d'une résistance de freinage (18f) reliée à l'onduleur (18d) et d'un moteur électrique (18e) pouvant être commandé par le biais de l'onduleur (18d), et le moteur électrique (18e) est relié en entraînement à un essieu d'entraînement du chariot élévateur de charges lourdes (1).

2. Chariot élévateur de charges lourdes (1) selon la revendication 1, **caractérisé en ce que** l'unité d'entraînement électrique est reliée par le biais d'une ligne électrique (20a) à une batterie, de préférence une batterie au plomb (20), afin d'être alimentée en énergie.

3. Chariot élévateur de charges lourdes (1) selon la revendication 2, **caractérisé en ce qu'**un dispositif de réglage de courant continu (22) est relié à la première ligne électrique (20a) par le biais d'une deuxième ligne électrique (22a) et **en ce qu'**une batterie de système (21) et un ordinateur de véhicule (11) sont reliés au convertisseur de courant continu (22).

4. Chariot élévateur de charges lourdes (1) selon la revendication 1, **caractérisé en ce que** l'unité d'entraînement électrique est reliée à un moteur à combustion interne, en particulier un moteur diesel (6), par le biais d'un générateur synchrone (18a) et d'un redresseur (18b) afin d'être alimentée en énergie.

5. Chariot élévateur de charges lourdes (1) selon l'une des revendications 1 à 4, **caractérisé en ce que** l'ensemble (18) comporte un convertisseur de courant continu (18k) et un condensateur, se présentant notamment sous la forme d'un Ultra-Cap (18l), et **en ce que** le condensateur est relié au bus d'alimentation en courant continu (18c) par le biais du convertisseur de courant continu (18k).

6. Chariot élévateur de charges lourdes (1) selon l'une des revendications 1 à 5, **caractérisé en ce que** la transmission (5) comprend comme autres entraînements un entraînement de direction (14), un entraînement d'inclinaison (15) destiné à incliner le mât (3), un entraînement de levage (16) destiné à lever et abaisser le moyen de réception de charge, un entraînement de blocage (28) destiné à bloquer un essieu arrière (2b) et/ou un essieu avant (2c) du chariot élévateur de charges lourdes (1) et au moins un entraînement supplémentaire (17) destiné à une fonction du moyen de réception de charge.

7. Chariot élévateur de charges lourdes (1) selon la revendication 6, **caractérisé en ce que** l'un au moins des autres entraînements est conçu comme un entraînement hydraulique qui comprend une pompe hydraulique (19).

8. Chariot élévateur de charges lourdes (1) selon la revendication 6 ou 7, **caractérisé en ce que** l'un au moins des autres entraînements est relié à une boîte de transfert (12).

9. Chariot élévateur de charges lourdes (1) selon la revendication 6 ou 7, **caractérisé en ce que** l'un au moins des autres entraînements comprend une unité d'entraînement électrique pourvue d'un onduleur (18g) et d'un moteur électrique (18h) qui est commandable par le biais de l'onduleur (18g) et qui est conçu de préférence comme un moteur asynchrone triphasé et **en ce que** l'autre entraînement est relié au bus d'alimentation en courant continu (18c) par le biais de l'onduleur (18g).

10. Chariot élévateur de lourdes charges (1) selon l'une des revendications 6 à 9, **caractérisé en ce que** l'entraînement de levage (16) est conçu pour être hydrauliquement libre et de préférence une unité d'entraînement électrique pourvue d'un moteur électrique (18j) qui peut commandable par le biais de l'onduleur (18i) et qui est de préférence conçu comme un moteur asynchrone triphasé, et **en ce que** l'unité d'entraînement électrique est reliée au bus d'alimentation en courant continu (18c) par le biais de l'onduleur (18i) et le moteur électrique (18j) est relié en entraînement à un dispositif de levage, pour entraîner le moyen de levage conçu de préférence sous forme de câble, de chaîne ou de bande et pour lever ou abaisser par ce biais le moyen de réception de charge.

11. Chariot élévateur de charges lourdes (1) selon l'une des revendications 1 à 10, **caractérisé en ce qu'**un ventilateur (1d) est relié au bus d'alimentation en courant continu (18c) par le biais d'un onduleur (23).

12. Chariot élévateur de charges lourdes (1) selon l'une des revendications 1 à 11, **caractérisé en ce que** le chariot élévateur de charges lourdes (1) est conçu sous la forme d'un chariot élévateur de conteneurs, en particulier d'un chariot élévateur de conteneurs vides, dont le moyen de réception de charge est conçu comme un cadre de répartition (4).
